## Europäisches Patentamt

## European Patent Office

## Office européen des brevets

(19)

(11) Veröffentlichungsnummer: **0 178 626**
**B1**

(12) **EUROPÄISCHE PATENTSCHRIFT**

(45) Veröffentlichungstag der Patentschrift: **23.05.90**

(21) Anmeldenummer: **85113037.7**

(22) Anmeldetag: **15.10.85**

(60) Teilanmeldung **88117883.4** eingereicht am **15/10/85.**

(51) Int. Cl.⁵: **F 16 L 37/12,** F 16 L 37/08, F 16 L 33/23, B 60 K 15/01

(54) **Kupplungsmuffe zum Verbinden von zwei Rohrleitungsenden.**

(30) Priorität: **18.10.84 DE 3438173**

(43) Veröffentlichungstag der Anmeldung:
**23.04.86 Patentblatt 86/17**

(45) Bekanntmachung des Hinweises auf die
Patenterteilung:
**23.05.90 Patentblatt 90/21**

(84) Benannte Vertragsstaaten:
**DE FR GB IT**

(56) Entgegenhaltungen:
**EP-A-0 097 089**
**DE-A-2 732 493**
**DE-A-2 830 799**
**DE-A-3 310 385**
**DE-B-2 622 269**
**FR-A-2 425 605**
**GB-A-2 086 514**
**US-A-3 916 929**
**US-A-4 451 069**

(73) Patentinhaber: **Vorschepoth, Heinrich**
**Mielenforster Heide 13**
**D-5000 Köln 80 (DE)**

(72) Erfinder: **Vorschepoth, Heinrich**
**Mielenforster Heide 13**
**D-5000 Köln 80 (DE)**
Erfinder: **Bowers, Rex**
**51, Nuneaton Road**
**Bulkington (GB)**

(74) Vertreter: **Langmaack, Jürgen, Dipl.-Ing. et al**
**Patentanwälte Maxton, Alfred, Dipl.-Ing.**
**Langmaack, Jürgen, Dipl.-Ing. Gotsteinstrasse**
**93 VII Postfach 51 08 06**
**D-5000 Köln 51 (DE)**

EP 0 178 626 B1

Courier Press, Leamington Spa, England.

## Beschreibung

Die Erfindung betrifft eine Kupplungsmuffe zum Verbinden der Enden zweier Leitungen für strömende Medien, insbesondere für Kraftstoffleitungen an Verbrennungsmotoren, mit einem Muffenteil, das wenigstens eine mit einem elastischen Dichtungselement versehene Einschuböffnung zur Aufnahme eines Leitungsendes aufweist, mit wenigstens zwei quer zur Einschubrichtung auslenkbaren Sicherungsfingern, die das Muffenteil gegen die Einschubrichtung überragen und deren freie Enden jeweils mit radial nach innen gerichteten Ansätzen versehen sind, die hinter einem Wulst am eingeschobenen Leitungsende anliegen, sowie mit einer axial verschiebbaren Sicherungshülse, die in ihrer Betriebsstellung die freien Enden der Sicherungsfinger im wesentlichen spielfrei umgreift.

In einer Vielzahl von Einsatzfällen müssen bei Maschinen Nebenaggregate über Rohrund/oder Schlauchleitungen miteinander verbunden werden. Hierbei ist vielfach auch die Notwendigkeit gegeben, daß eine starre Rohrleitung, beispielsweise aus Metall, mit einer biegsamen Schlauchleitung aus Gummi oder Kunststoff verbunden werden muß, wie dies beispielsweise für Kraftstoffleitungen an Verbrennungsmotoren üblich ist. Gerade im Fall der Verbrennungsmotoren, insbesondere bei der Automobil-Serienproduktion, kommt es vor allem darauf an, daß zum einen die Kupplungsmuffe leicht zu montieren ist, insbesondere durch eine einfache Steckmontage, andererseits die Muffenverbindung aber so fest ist, daß sie sich auch bei den starken Erschütterungen beim Betrieb eines Kraftfahrzeuges nicht lösen kann. Gleichwohl muß die Muffenverbindung so ausgebildet sein, daß zu Reparaturzwecken beide Leitungsteile voneinander gelöst werden können wobei es wichtig ist, daß die Außenfläche der Leitungsenden, die gleichzeitig als Dichtenden dienen, durch die Muffenverbindung nicht beschädigt werden.

Aus der EP-A-97 089 ist eine Schlauchkupplung bekannt, die ein gesondertes, mit der anzuschließenden Rohrleitung zu verbindendes Steckteil erfordert, das mit hoher Präzision anzufertigen ist. Die zugehörige Kupplungsmuffe weist radial nach außen schwenkbar gelagerte Haltehaken auf, die mit ihrem Haken in eine entsprechende Hinterschneidung am Steckteil eingreifen und die auf ihrer Außenseite mit einer Leitkurve versehen sind, mit der sie sich auf einem Führungskragen an einer axial verschiebbaren und druckfederbelasteten Sicherungshülse abstützen. Wird die Sicherungshülse gegen den Druck der Feder zurückgezogen, dann schwenken die Sicherungshaken nach außen und geben das Steckteil frei. Jede Manipulation an der Sicherungshülse führt somit zum sofortigen Öffnen der Kupplung.

Aus der US-A-4 451 069 ist eine ähnliche Schlauchkupplung bekannt. Diese besteht aus einem mit einer Sicherungshülse versehenen und eine außenliegende Dichtung getragenden Steckteil und einem mit dem anderen Leitungsende zu verbindenden, mit freiliegenden Sicherungsfingern versehenen Muffenteil. Auch hier ist es nicht möglich, in den Muffenteil unmittelbar ein mit einer Wulst versehenes Leitungsende einzuschieben, sondern es muß vielmehr jeweils mit beiden Leitungsenden ein Steckteil bzw. ein Muffenteil verbunden werden. Ein Nachteil dieser Bauform besteht ferner darin, daß die Sicherung der Steckverbindung mit zurückgeschobener Sicherungshülse ungenügend ist, so daß eine Trennung schon bei geringen Axialkräften möglich ist. Die Abstützung der Kupplungsmuffen gegenüber Querkräften ist hierbei wegen der geringen Überdeckung gerade in der Betriebsstellung ungenügend.

Aus der DE-A-1 33 10 385 ist eine Kupplungsmuffe bekannt, bei der ein Sperrteil zunächst auf das einzuschiebende Leitungsende soweit aufgeschoben wird, daß es mit dem Haltebund des Leitungsendes formschlüssig verbunden ist. Anschliessend wird dann das Leitungsende mit aufgesetztem Sperrteil in das Muffenteil soweit eingeschoben, daß das freie Ende des Sperrteils in einen entsprechenden Haltebund des Muffenteils einrastet. Das freie Ende des Sperrteils ragt hierbei aus dem Muffenteil heraus und ist durch entsprechende Schlitze radial verformbar, so daß zum Lösen der Steckverbindung diese Teile nach innen gedrückt werden können und damit ein Herausziehen des Leitungsendes möglich ist. Der Nachteil der vorbekannten Steckverbindung besteht darin, daß der als Dichtungselement vorgesehene O-Ring frei in der Einschuböffnung des Muffenteils liegt und erst nach dem Einschieben des Leitungsendes durch die Stirnkante des Sperrteils in der Einschuböffnung gesichert wird. Bei einem Herausziehen des Leitungsendes besteht die Gefahr, daß der O-Ring in der Einschuböffnung abrollt und zusammen mit dem Leitungsende herausgezogen wird. Ein besonderer Nachteil dieser vorbekannten Kupplungsmuffe besteht darin, daß über das frei zugängliche, verformbare Ende des Sperrteils auch ein unbeabsichtigtes Lösen der Steckverbindung möglich ist.

Aus der GB-A-20 86 514 ist eine Kupplungsmuffe der eingangs bezeichneten Art bekannt, bei der die Sicherungsfinger Teil einer über das Muffenteil schiebbaren Haltemuffe sind, die auf der den Sicherungsfingern abgekehrten Seite mit einem Kragen versehen ist und die auf das einzuschiebende Leitungsende soweit aufgeschoben werden muß, bis der Kragen der Haltemuffe den Haltebund des Leitungsendes hintergreift. Beim Einschieben des Leitungsendes in das Muffenteil wird die Haltemuffe mit ihren Sicherungsfingern außen über das Muffenteil geschoben, bis die radial nach innen gerichteten Ansätze eine entsprechende Hinterschneidung am Muffenteil hintergreifen. Anschliessend wird über die Haltemuffe ein Sicherungsring geschoben, der die Sicherungsfinger fixiert. Der Nachteil dieser bekannten Kupplungsmuffe besteht darin, daß die Haltemuffe mit den Sicherungsfingern entweder vom anderen Ende der anzuschließenden

2

Rohrleitung "aufgefädelt" werden muß oder aber über das einzuschiebende Leitungsende und den damit verbundenen Haltebund unter Verformung aufgeschoben werden muß. Hierbei besteht die Gefahr, daß die Außenfläche des mit dem Dichtring zusammenwirkenden Teils des Leitungsendes beschädigt wird und damit Undichtigkeiten vorhanden sind. Ein weiterer Nachteil besteht darin, daß der über die Haltemuffe zu schiebende Sicherungsring noch vor dem Aufschieben der Haltemuffe auf das Leitungsende aufgefädelt werden muß und dann als loses d.h. zusätzliches Bauteil über die Haltemuffe geschoben werden muß. Für eine industrielle Montage, beispielsweise an einem Fertigungsband,erfordert die bekannte Muffe viele Handgriffe und eine hohe Aufmerksamkeit des Montierenden, um eine sichere Montage zu gewährleisten.

Der Erfindung liegt die Aufgabe zugrunde, eine Kupplungsmuffe der eingangs bezeichneten Art so zu verbessern, daß alle erforderlichen Bauteile einschließlich der Sicherungsmittel in die Kupplungsmuffe integriert sind, so daß bei der Montage lediglich das anzuschließende Leitungsende einzuschieben ist und die Sicherungsmittel in ihre Funktionsstellung gebracht werden müssen.

Diese Aufgabe wird erfindungsgemäß mit den im Kennzeichnungsteil des Anspruchs 1 genannten Mitteln gelöst. Da die Sicherungsfinger mit ihren Haltekrallen beieingeschobener Sicherungshülse fest am Außenumfang des eingeschobenen Leitungsendes anliegen, wobei die Haltkrallen mit Abstand zu der vom elastischen Dichtungselement gebildeten Dichtungsebene liegen, werden bei einer Belastung der Kupplungsmuffe durch Querkräfte zusätzliche Verformungen des elastischen Dichtungselementes, die zu einer Beeinträchtigung der Dichtkraft führen könnten, vermieden. Dieser Effekt wird noch verstärkt, wenn in Einschubrichtung gesehen hinter dem elastischen Dichtungselement das Muffenteil eine das einzuschiebende Rohrelement mit nur geringem Spiel umfassende Aufnehmung aufweist, so daß das eingeschobene Leitungselement gegenüber Querkräften starr abgestützt ist und keine einseitigen Querkräfte auf das Dichtungselement wirken können. Da zweckmäßigerweise mehr als zwei Sicherungsfinger angeordnet werden, so daß die Haltekrallen das eingeschobene Leitungsende ringförmig umfassen, ist es bei entsprechender Dimensionierung und bei entsprechendem Reibungsbeiwert zwischen den Haltekrallen und dem Leitungsende möglich, das Leitungsende gegen axiale Belastungen reibschlüssig mit der Kupplungsmuffe zu verbinden, da die hierzu erforderlichen radialen Kräfte in einfacher Weise über die in der Betriebsstellung über die Sicherungsfinger geschobene Sicherungshülse aufgebracht werden kann. Da insbesondere für den Einsatz bei der Montage von Kraftstoffleitungen an Kraftfahrzeugen das aus Metall gefertigte Leitungsende mit Abstand zum freien Ende auf der Außenseite einen ringförmig umlaufenden Wulst aufweist, werden zweckmäßigerweise die Sicherungsfinger mit ihren Haltekrallen so lang bemessen, daß die Haltekrallen schon bei eingeschobenem Leitungsende diesen Wulst hintergreifen, so daß auch ohne übergeschobene Sicherungshülse das eingeschobene Leitungsende in axialer Richtung schon formschlüssig mit der Kupplungsmuffe verbunden ist.

Diese übergeschobene Stellung der Sicherungshülse wird als Betriebsstellung gekennzeichnet. Bei zurückgeschobener Sicherungshülse, d.h. bei freiliegenden Enden der Sicherungsfinger ist es jedoch ohne weiteres möglich, das mit einem Wulst versehene Leitungsende in das Muffenteil einzuschieben oder aber aus dem Muffenteil herauszuziehen, da die Sicherungsfinger auslenkbar sind und hierbei als lösbare Schnappverbindung wirken. Diese Stellung der Sicherungshülse wird als Montagestellung bezeichnet. Sollen mit Hilfe der erfindungsgemäßen Kupplungsmuffe eine Schlauchleitung mit einer starren Rohrleitung verbunden werden, so weist das Muffenteil auf seiner der Einschuböffnung abgekehrten Seite einen rohrförmigen, auf der Aussenseite profilierten Rohrzapfen auf, über den die Schlauchleitung geschoben wird. Sollen zwei Schlauchleitungen miteinander verbunden werden, so muß in das in die Einschuböffnung einzuschiebende Schlauchende ein entsprechendes Rohrstück eingeschoben sein, das zum einen die über die Haltekrallen in der Betriebsstellung ausgeübten Kräfte ohne Verformung aufzunehmen vermag und zum anderen den für eine in axialer Richtung formschlüssige Sicherung erforderlichen auf der Außenseite ringförmig umlaufenden Bund aufweist. Für die Verbindung zweier starrer Rohrleitungen weistdas im wesentlichen rohrförmig ausgebildete Muffenteil an seinen beiden Enden eine Einschuböffnung mit elastischem Dichtungselement auf, wobei dann nach beiden Seiten hin Sicherungsfinger mit Haltekrallen und jeweils entsprechend zwei axial verschiebbare Sicherungshülsen vorgesehen sind. Auf diese Weise können· auch in lötfreier Steckmontage zwei starre Rohrleitungsenden lösbar miteinander verbunden werden, wobei auch hier wiederum eine in bezug auf die elastischen Dichtungen querkraftfreie und in axialer Richtung kraftschlüssige Muffenverbindung gegeben ist. Durch die Anordnung einer Rast ist vielmehr sichergestellt, daß zum Verschieben der Sicherungshülse aus der Montagestellung in die Betriebsstellung eine definierte Kraft aufgebracht werden muß. Durch die zweite, die Betriebsstellung definierende Rast ist andererseits gewährleistet, daß die Sicherungshülse nicht unbeabsichtigt zurückgeschoben werden kann und die Verbindung ungewollt getrennt wird.

Die Rastverbindung zwischen Sicherungshülse und Muffenteil kann nach Art einer Ratsche mit einer Vielzahl von Zähnen ausgebildet sein. In einer zweckmäßigen Ausgestaltung der Erfindung ist jedoch vorgesehen, daß die Rasten durch wenigstens zwei in axialem Abstand zueinander auf dem Außenumfang des Muffenteils angeordnete Nuten gebildet werden, wobei der zwischen den Nuten verbleibende stegförmige Teil abgeschrägte Gleitkanten aufweist. Hierdurch ist gewährleistet, daß die Sicherungshülse aus der einen Raststellung in die andere Raststellung mit einem definierten, jedoch verhältnismäßig geringen Kraftaufwand verschoben werden kann. In zweckmäßiger Ausgestaltung der Erfindung ist hierbei insbesondere vorgesehen, daß die Sicherungshülse wenigstens zwei gegenüberliegend angeordnete, federnd auslenkbare Rastelemente aufweist, die in die Rasten am Muffenteil eingreifen. Hierbei ist es noch ergänzend möglich, die Flächen der Rastelemente, die beim Verschieben über die Gleitkanten des stegförmigen Teils zwischen den beiden Nuten geführt werden, einseitig abzuschrägen, so daß ein Verschieben aus der Montagestellung in die Sicherungsstellung mit geringem Kraftaufwand möglich ist, während ein Verschieben der Sicherungshülse aus der Betriebsstellung in die Montagestellung wegen der Sperrwirkung der Rastelemente einen erhöhten Kraftaufwand erfordert.

Während es grundsätzlich möglich ist, das Muffenteil mit den Sicherungsfingern einstückig herzustellen, was insbesondere dann angezeigt ist, wenn das elastische Dichtungselement als gesondertes Bauteil unter Vorspannung in die Einschuböffnung eingesetzt wird, ist in einer bevorzugten Ausgestaltung der Erfindung vorgesehen, daß die Sicherungsfinger mit ihrem festen Ende an einem das Muffenteil fcrmschlüssig umgreifenden Haltering befestigt sind. Die Anordnung der Sicherungsfinger als gesondertes Bauteil erfordert zwar bei der Konfektionierung der Kupplungsmuffe einen zusätzlichen Arbeitsgang, da der Haltering und das Muffenteil zunächst zusammengesteckt werden müssen und anschließend die Sicherungshülse übergeschoben werden muß. Der besondere Vorteil dieser Bauform liegt jedoch darin, daß es hierdurch möglich wird, das elastische Dichtungselement in die gegen die Einschubrichtung geöffnet napfartige Erweiterung unmittelbar einzuvalkanisieren, da der Rand der Einschuböffnung freiliegt, so daß das Muffenteil und das Werkzeug relativ zueinander drehend bewegt werden können und das elastische Material eingebracht werden kann. Der besondere Vorteil liegt hier vor allem darin, daß durch das Einvulkanisieren des elastischen Dichtungselementes die Verbindung zwischen Dichtungselement und Muffenteil absolut dicht ist, so daß nur noch durch entsprechende Verpressung zwischen Dichtungselement und eingeschobenem Rohrteil für die Abdichtung zwischen Muffenteil und Leitungsende Sorge zu tragen ist.

In zweckmäßiger Ausgestaltung der Erfindung ist ferner vorgesehen, daß der die Sicherungsfinger tragende Haltering geteilt ist. Der Haltering kann hier entweder aus zwei losen Teilstücken bestehen oder aber einstückig mit einer dünnen biegsamen Verbindung versehen sein, wie dies bei der Herstellung aus einem Kunststoff in Form eines sogenannten "Filmgelenkes" möglich ist. Der Haltering ist zweckmäßigerweise schalenförmig ausgebildet und umgreift einen entsprechend geformten Haltesteg am Muffenteil, so daß der Haltering mit den Sicherungsfingern formschlüssig und axial unverschiebbar fest mit dem Muffenteil verbunden ist.

In bevorzugter Ausgestaltung der Erfindung ist ferner vorgesehen, daß die Sicherungsfinger zumindest im Bereich ihrer freien Enden anders gefärbt sind als die Sicherungshülse. Dies hat den Vorteil, daß in der vorstehend beschriebenen Montagestellung die Montagestellung durch die Farbgebung der Sicherungsfinger sichtbar ist, so daß auch eine optische Kontrolle möglich ist, ob nach dem Montieren die Sicherungshülse auch in die Betriebsstellung verschoben ist. Bei entsprechender Längenausbildung der Sicherungshülse überdeckt diese in der Betriebsstellung die Sicherungsfinger vollständig.

In einer weiteren Ausgestaltung der Erfindungist vorgesehen, daß zumindest die Sicherungshülse aus Metall hergestellt aud auf dem Muffenteil mit radialem Abstand geführt ist sowie in Betriebsstellung das Muffenteil einschließlich der Sicherungsfinger sowie einen Teil der mit dem Muffenteil verbundenen flexiblen Schlauchleitung überdeckt. Dies erlaubt es, auch bei aus Kunststoff hergestellten Steckmuffenteilen die Feuerwiderstandsfähigkeit zu erhöhen, wie dies beispielsweise für Kraftstoffleitungen wünschenswert ist.

Die Erfindung wird anhand schematischer Zeichnungen eines Ausführungsbeispieles näher erläutert. Es zeigen:

Fig. 1 eine Kupplungsmuffen im Längsschnitt in Montagestellung;

Fig. 2 eine Kupplungsmuffe gem. Fig. 1 im Längsschnitt in Betriebsstellung;

Fig. 3 einen Schnitt gem. der Linie III-III in Fig. 2;

Fig. 4 einen Schnitt gem. der Linie IV-IV in Fig. 2;

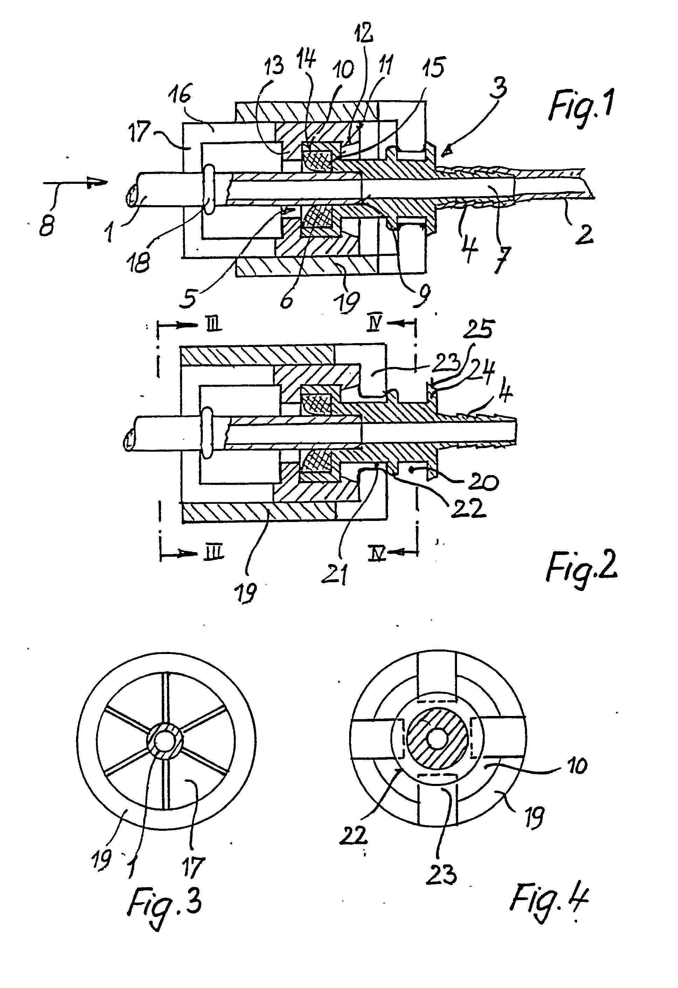

Die in Fig 1 dargestellte Kupplungsmuffe dient zur Verbindung einer Rohrleitung 1 aus Metall mit einer flexiblen Schlauchleitung 2 aus Gummit oder Kunststoff. Die Kupplungsmuffe weist einen tentralen Muffenteil 3 auf, der in etwa rohrförmig ausgebildet ist und der an einem Ende einen zapfenförmigen Ansatz 4 mit profilierter Außenfläche aufweist, auf den die flexible Schlauchleitung 2 aufgeschoben und dort in üblicher Weise befestigt ist. Dem zapfenartigen Ansatz gegenüberliegend weist das Muffenteil 3 eine Einschuböffnung 5 auf, die napfartig ausgebildet ist und in der ein ringförmiges Dichtungselement 6 aus elastischem Material befestigt ist. Das Dichtungselement 6 kann in die napfartige Ausnehmung der Einschuböffnung 5 eingeklebt, einvulkanisiert oder aber, wie beim Ausführungsbeispiel dargestellt und nachstehend noch näher beschrieben, unter Vorspannung lösbar eingesetzt sein. Die Einschuböffnung 5 ist hierbei koaxial zur Durchgangsöffnung 7 ausgerichtet. In Einschubrichtung von der Einschuböffnung 5 her gesehen (Pfeil 8), ist das der Einschuböffnung zugekehrte Ende der Durchtrittsöffnung 7 um ein vorgegebenes Maß mit einem größeren Durchmesser versehen, der geringfügig größer ist als der Außendurchmesser des einzuschiebenden Endes des Rohres 1. Hierdurch wird im Muffenteil 3 ein Ansatz 9 gebildet, der beim Einschieben des Rohres 1 als Endanschlag dient.

In Richtung des Pfeiles 8 ist auf dem Muffenteil 3 ein Haltering 10 aufgeschoben, der an seinem überzuschiebenden Ende 11 mit krallenartigen Vorsprüngen 12 versehen ist. Mit Abstand zum freien Ende 11 weist der Haltering 10 einen nach innen vorspringenden Kragen 13 auf, der so bemessen ist, daß er das elastische Dichtungselement 6 geringfügig überdeckt. Bei einem lose einsetzbaren Dichtungselement wird dieses in seiner Dicke nun so bemessen, daß es die vom Rand der Einschuböffnung gebildete Ebene geringfügig überragt, so daß beim Aufschieben des Halteringes 10 das Dichtungselement um ein entsprechendes Maß vom Kragen 13 in die napfartige Ausnehmung gepreßt wird und dann mit entsprechender Vorspannung nicht nur an der Umfangsfläche 14 der napfartigen Ausnehmung, sondern auch an der stirnseitigen Fläche 15 angepreßt ist, so daß auch hier eine einwandfreie Abdichtung erzielt und ein Umfliessen des Dichtungselementes 6 auf seiner Außenseite ausgeschlossen ist. Die durch die Verpressung des Dichtungselementes 6 bei der Montage auftretende Axialkraft wird hierbei durch die Vorsprünge 12, die auf der Außenseite des Mufenteils 3 einrasten, aufgenommen. Das Aufschieben des Halteringes 10 auf den Muffenteil 3 ist hierbei unter geringfügiger Verformung des aus einem Kunststoff hergestellten Halteringes 10 möglich.

Am Haltering 10 sind nun in Richtung auf das einzuschiebende Rohr 1 auf den Umfang gleichmäßig verteilt mehrere Sicherungsfinger 16 angeordnet, die an ihrem freien Ende jeweils in einer Haltekralle 17 auslaufen. Die Haltekralle 17 ist hierbei gegen das einzuschiebende Rohr 1 gerichtet. Die Sicherungsfinger 16 sind bei dem dargestellten Ausführungsbeispiel einstückig mit dem Haltering 10 verbunden und quer zur Einschubrichtung 8 auslenkbar. Die Haltekrallen 17 sind hierbei so bemessen, daß sie an der Außenwandung des in den Muffenteil 3 eingeschobenen Rohres 1 anliegen. Das Rohr 1 ist hierbei in entsprechendem Abstand zu seinem freien Ende auf der Außenseite mit einem umlaufenden Wulst 18 versehen. Wird das Rohr 1 in die Einschuböffnung 5 eingeschoben, so werden durch den umlaufenden Wulst 18 die Sicherungsfinger 16 über die Haltekrallen 17 zunächst nach außen ausgelenkt, um sie dann federnd wieder gegen die Außenwandung des Rohres 1 zu legen. Aufgrund der vorgegebenen Abmessung des Wulstes 18 zum Ansatz 9 im Muffenteil 3, in dem das freie Ende des Rohres 1 in eingeschobenem Zustand zur Anlage kommt, legen sich die Haltekrallen 17 unmittelbar hinter dem Wulst 18 an, so daß schon in dieser Stellung eine formschlüssige Verbindung zwischen dem Muffenteil 3 und dem Rohr 1 gegeben ist. Nur mit einem etwas erhöhten Kraftaufwand ist es möglich, das Rohr 1 wieder herauszuziehen.

Um nun das eingeschobene Rohr 1 auch in axialer Richtung gegen ein Lösen zu sichern, ist auf dem Haltering 10 eine Sicherungshülse 19 in axialer Richtung verschiebbar gelagert. Wird die Sicherungshülse 19 aus der in Fig. 1 dargestellten Montagestellung in die in Fig. 2 dargestellte Betriebsstellung über die Sicherungsfinger 16 vorgeschoben, sosind diese nicht mehr nach außen auslenkbar. Hierdurch ergibt sich eine feste, formschlüssige Verbindung zwischen Kupplungsmuffe und Rohr 1. Will man das Rohr 1 wieder von der Kupplungsmuffe lösen, muß die Sicherungshülse 19 wieder in die in Fig. 1 dargestellte Montagestellung zurückgeschoben werden, damit die Sicherungsfinger 16 beim Herausziehen des Rohres nach außen auslenkbar sind.

Um nun sicherzustellen, daß sich nicht während des Betriebes die Sicherungshülse 19 unkontrolliert verschieben kann, sind auf dem Muffenteil mit Abstand zueinander zwei umlaufende Nuten 20 und 21 vorgesehen, die durch einen Steg 22 mit abgerundeten Kanten voneinander getrennt sind. Die Nut 20 definiert hierbei die Montagestellung und die Nut 21 definiert die Betriebsstellung der Sicherungshülse 19. Die Sicherungshülse 19 ist dementsprechend an ihrem den Nuten zugeordneten Ende mit federnd auslenkbaren Rastelementen 23, beispielsweise in Form auslenkbarer, hakenförmiger Ansätze versehen, deren freie Ende je nach Stellung der Sicherungshülse entweder in die Nut 20 oder aber in die Nut 21 einrasten. Die abgerundeten Kanten des Steges 22 erleichtern hierbei ein Verschieben aus der einen Stellung in die andere.

Zum zapfenförmigen Ansatz 4 hin ist die Nut 20 durch einen Steg 24 mit etwas größerem Außendurchmesser und gegen den zapfenförmigen Ansatz 4 in abgeschrägten Kanten angeordnet. Dieser Steg erlaubt es, die Sicherungshülse 19 vom zapfenförmigen Ansatz 4 her auf das Muffenteil aufzuschieben, wobei die Abschrägung 25 ein Überschieben der Rastelemente 23 in die in Fig. 1 dargestellte Montagestellung erlaubt. Ein Abziehen der Sicherungshülse ist aufgrund dieser Formgebung demegegenüber nicht möglich. In Fig. 4 sind hierbei die Rastelemente 23 in einer Stirnansicht dargestellt. Bei dem Ausführungsbeispiel sind vier Rastelemente vorgesehen, um ein Verkanten bei einer Bewegung der Sicherungshülse zu vermeiden. Für die Funktion genügt allerdings ein einziges Rastelement.

Die In Fig. 2 dargestellte Betriebsstellung läßt ferner einen besonderen Vorteil der Kupplungsmuffe erkennen. Dadurch, daß das freie Ende des eingeschobenen Rohres 1 in der durch den Ansatz 9 begrenzten Erweiterung der Durchgangsöffnung 7 gehalten ist und hinter dem Wulst 18 über die Sicherungsfinger 16 und die darübergeschobene Sicherungshülse 19 ebenfalls auf dem Muffenteil 3 abgestützt ist, ergibt sich in einer Richtung quer zur Längsachse der Kupplungsmuffe eine formschlüssige, praktisch starre Verbindung, so daß bei einer Belastung des eingeschobenen Rohres durch Querkräfte etwas außerhalb der Kupplungsmuffe keinerlei Verformungskräfte auf das elastische Dichtungselement 6 einwirken können. Die durch den Außendurchmesser einerseits und durch den lichten Innendurchmesser des Dichtungselementes bei eingeschobenem Rohr 1 andererseits auftretende Verpressung des Dichtungselementes, die auch die Dichtkraft definiert, wird somit bei zusätzlichen Querkräften nicht beeinflußt.

In Fig. 3 ist eine Stirnansicht dargestellt, aus der die Anordnung der Haltekrallen 17 in bezug auf das Rohr 1 ersichtlich ist. Wie diese Stirnansicht erkennen läßt, kann der Haltering 10 mit den Sicherungsfingern 16 entweder als geschlossenes Bauteil, wie vorstehend beschrieben, hergestellt werden, oder aber auch in zwei schalenförmige Teile aufgeteilt sein, die bei der Herstellung der Kupplungsmuffe seitlich auf das Muffenteil aufgesetzt werden und dann durch die axial übergeschobene Sicherungshülse 19 zusammengehalten werden. Anstelle einer Aufteilung in zwei getrennte Halbschalen ist es auch möglich, die beiden Teile schon bei der Herstellung über einen dünnen Kunststoffsteg nach Art eines sogenannten "Film-gelenks" miteinander zu verbinden, so daß die beiden Halbschalen ein zusammenhängendes Bauteil darstellen, was mit einem Handgriff seitlich auf das Muffenteil 3 durch Zusammenklappen aufgebracht werden kann. Bei dieser Bauweise ist es nicht so einfach möglich, das elastische Dichtungselement 6 auch in axialer Richtung über den Haltering 19 in seinem Sitz zu verpressen. Bei einer derartigen Bauform ist es daher angezeigt, das Dichtungselement 6 in die napfartige Ausnehmung der Einschuböffnung 5 einzukleben oder direkt einzuvulkanisieren. Dies ist deshalb möglich, weil das Muffenteil 3 in seinem Randbereich keinerlei Vorsprünge aufweist, so daß das Material des elastischen Dichtungselementes nach entsprechender Vorbehandlung der Wandungen der napfartigen Ausnehmung unmittelbar in diese bei relativer Verdrehung von Spritzwerkzeug und Muffenteil 3 angebracht und in situ einvulkanisiert werden kann.

Bei vorgespannt eingesetzten oder eingeklebten Dichtungselementen ist es auch möglich, das Muffenteil 3 so herzustellen, daß die Sicherungsfinger einstückig an das Muffenteil 3 angeformt sind, so daß die Kupplungsmuffe praktisch noch zwei Bauteile aufweist, nämlich das Muffenteil 3 mit Dichtungselement und Sicherungsfingern sowie die darüberzuschiebende Sicherungshülse 19.

Will man mit Hilfe der dargestellten und beschriebenen Kupplungsmuffe zwei Schlauchleitungen aus flexiblem Material miteinander verbinden, so muß das in die Einschuböffnung 5 einzuführende Ende der Schlauchleitung in seinem Endbereich mit einer eingeschobenen Metallhülse ausgesteift werden, die zweckmäßigerweise darüber hinaus in entsprechendem Abstand vom freien Ende mit einem umlaufenden Wulst versehen ist, der sich in eingedrücktem Zustand durch das Material der Schlauchwandung durchdrückt und so wiederum die angestrebte, in axialer Richtung formschlüssige Verbindung bewirkt.

Zur Verbindung zweier starrer Rohrleitungen ist eine entsprechende Abwandlung der dargestellten Kupplungsmuffe in der Weise möglich, daß das Muffenteil an beiden Enden Einschuböffnungen mit elastischen Dichtungselementen, Sicherungsfingern und zwei jeweils über die Sicherungsfinger verschiebbaren Sicherungshülsen versehen ist. Bildet man das zwischen den beiden Einschuböffnungen liegende Zwischenstück des Muffenteils 3 biegsam aus, beispielsweise durch die Wahl eines entsprechenden elastischen Werkstoffs, so ergibt sich auch bei der Verbindung zweier starrer Rohrleitungen im Bereich der Kupplungsmuffe eine entsprechende Artikulationsmöglichkeit der Rohrleitung im Verbindungsbereich.

Fertigt man den Haltering mit seinen Sicherungsfingern einerseits aus einem hellfarbigen Kunststoff und die Sicherungshülse 19 andererseits aus einem dunkelfarbigem Kunststoff, so läßt ein Vergleich zwischen der in Fig. 1 dargestellten Montagestellung und der in Fig. 2 dargestellten Betriebsstellung erkennen, daß dann eine einfache optische Kontrollmöglichkeit gegeben ist, ob die Leitungsverbindung fest montiert ist oder ob das eingeschobene Rohr noch herausgezogen werden kann. Dies ist sowohl bei der Erstmontage als auch bei späteren Reparaturen von Bedeutung. Das dargestellte Ausführungsbeispiel läßt ferner erkennen, daß bei einer derart ausgebildeten Kupplungsmuffe die Außenwandung des einzuschiebenden Rohres im Dichtungsbereich mechanisch nicht beansprucht wird, so daß auch bei einem mehrfachen Lösen und wieder Schließen der Kupplungsmuffe die Dichtfläche am Rohrende einerseits und des Dichtelementes andererseits keine mechanischen Beschädigungen erfahren kann, die die Dichtigkeit beeinflussen würden.

Die Haltekrallen 17 der Sicherungsfinger 16 können im Bereich ihrer Anlagefläche an der Außenwandung des einzuschiebenden Leitungsendes 1 auch mit einer vorzugsweise nutartigen Ausnehmung versehen sein. Diese Ausnehmung ist so bemessen, daß sie den Wulst 18 zu beiden Seiten umgreift, so daß die formschlüssige axiale Sicherung des Leitungsendes 1 in eingeschobenem Zustand in beiden Richtungen über die Haltekrallen erfolgt. Bei der dargestellten Ausführungsform und bei der vorstehend beschriebenen Abwandlung ist eine formschlüssige, aber noch lösbare Sicherung bereits dann gegeben, wenn das Leitungsende soweit eingeschoben ist, daß die Haltekrallen 17 den Wulst 18, wie dargestellt, hintergreifen oder, wie vorstehend beschrieben, umgreifen. Bereits in diesem Zustand ist die Kupplungsmuffe voll betriebsfähig. Erst nach dem Überschieben der Sicherungshülse 19 wird die formschlüssige Verbindung unlösbar.

Stellt man die Sicherungshülse 19 aus Metall her, bei sonst aus Kunststoff gefertigten Teilen, dann ergibt sich zusätzlich eine Erhöhung der Feuerdierstandsfähigkeit der Kupplungsmuffe, da eine wärmeleitende Verbindung zwischen diesen Teilen auf wenige schmale Zonen beschränkt ist und der Zwischenraum 30 isolierend wirkt. Eine Erhöhung der Feuerwiderstandsfähigkeit auf beispielsweise drei Minuten kann bei der Verwendung im Kraftfahrzeugbau bei Unfällen lebensrettend sein.

**Patentansprüche**

1. Kupplungsmuffe zum Verbinden der Enden zweier Leitungen für strömende Medien, insbesondere für Kraftstoffleitungen an Verbrennungsmotoren, mit einem Muffenteil (3), das wenigstens eine mit einem elastischen Dichtungselement (6) versehene Einschuböffnung (5) zur Aufnahme eines Leitungsendes aufweist, mit wenigstens zwei quer zur Einschubrichtung (8) auslenkbaren Sicherungsfingern (16), die das Muffenteil (3) gegen die Einschubrichtung (8) überragen und deren freie Enden jeweils mit radial nach innen gerichteten Ansätzen (17) versehen sind, die hinter einem Wulst (18) am eingeschobenen Leitungsende (1) anliegen, sowie mit einer axial verschiebbaren Sicherungshülse (19), die in ihrer Betriebsstellung die freien Enden der Sicherungsfinger (16) im wesentlichen spielfrei umgreift, dadurch gekennzeichnet, daß die Sicherungsfinger (16) federnd ausgebildet sind und mit ihrem festen Ende formschlüssig am Muffenteil (3) befestigt sind, auf dem die Sicherungshülse (19) geführt ist, und daß das Muffenteil (3) mit wenigstens einer Rast für die Sicherungshülse (19) versehen ist, die zumindest die Betriebsstellung der Sicherungshülse (19) definiert, wobei die Sicherungshülse (19) wenigstens zwei vorzugsweise gegenüberliegend angeordnete, federnd auslenkbare Rastelemente (23) aufweist, die in die Rasten am Muffenteil (3) eingreifen.

2. Kupplungsmuffe nach Anspruch 1, dadurch gekennzeichnet, daß zwei Rasten vorgesehen sind, die durch wenigstens zwei in axialem Abstand zueinander auf dem Außenumfang des Muffenteils (3) angeordnete Nuten (20, 21) gebildet werden, wobei der zwischen den Nuten (20, 21) verbleibende stegförmige Teil (22) abgeschrägte Gleitkanten aufweist.

3. Kupplungsmuffe nach einem den Ansprüche 1 bis 2, dadurch gekennzeichnet, daß die Sicherungsfinger (16) mit ihrem festen Ende an einem das Muffenteil (3) formschlüssig umgreifenden Haltering (10) befestigt sind.

4. Kupplungsmuffe nach Anspruch 3, dadurch gekennzeichnet, daß der Haltering (10) geteilt ist.

5. Kupplungsmuffe nach einem der Ansprüche 1 bis 4, dadurch gekennzeichnet, daß die Sicherungsfinger (16) zumindest im Bereich ihrer freien Enden anders gefärbt sind als due Sicherungshülse (19).

6. Kupplungsmuffe nach einem der Ansprüche 1 bis 5, dadurch gekennzeichnet, daß das elastische Dichtungselement (6) ringförmig ausgebildet und unter Vorspannung in eine Ausnehmung im Muffenteil (3) eingesetzt ist.

7. Kupplungsmuffe nach einem der Ansprüche 1 bis 6, dadurch gekennzeichnet, daß das elastische Dichtungselement (6) in eine gegen die Einschubrichtung (8) geöffnete napfartige Erweiterung einvulkanisiert ist.

8. Kupplungsmuffe nach einem der Ansprüche 1 bis 7, dadurch gekennzeichnet, daß das Muffenteil (3) auf der den Sicherungsfingern (16) abgekehrten Seite des Dichtungselementes (6) eine dem Außendurchmesser des einzuschiebenden Rohrendes entsprechende, durch einen Ansatz (9) axial begrenzte Erweiterung aufweist.

9. Kupplungsmuffe nach einem der Ansprüche 1 bis 8, dadurch gekennzeichnet, daß zumindest die Sicherungshülse (19) aus Metall hergestellt und auf dem Muffenteil (3) mit radialem Abstand geführt ist sowie in Betriebsstellung das Muffenteil (3) einschließlich der Sicherungsfinger (16) sowie einen Teil der mit dem Muffenteil (3) verbundenen flexiblen Schlauchleitung (2) überdeckt.

**Revendications**

1. Manchon de raccordement pour relier les extrémités de deux conduites pour fluides en écoulement, en particulier pour des conduites de carburant sur des moteurs à combustion interne, comportant une partie formant manchon (3) qui présente au moins une ouverture d'enfichage (5), munie d'une garniture d'étanchéité élastique (6), pour recevoir une extrémité de conduite, comportant aussi au moins deux doigts de sécurité (16) qui peuvent s'écarter transversalement à la direction d'enfichage (8), qui vont au-delà de la partie formant manchon (3) dans la direction opposée à la direction d'enfichage (8) et dont les extrémités libres sont respectivement munies de saillies (17) qui sont dirigées radialement vers l'intérieur et qui s'appuient derrière un bourrelet (18) prévu à l'extrémité enfichée de la conduite (1), et comportant aussi une douille de sécurité (19) qui peut coulisser axialement et qui, dans sa position de service, enserre, sensiblement sans eu les extrémités libres des doigts de sécurité (16), caractérisé en ce que les doigts de sécurité (16) sont conçus élastiques et, par leur extrémité fixe, sont fixés, de par la forme, à la partie formant manchon (3) sur laquelle est guidée la douille de sécurité (19); et en ce que la partie formant manchon (3) est munie, pour la douille de sécurité (19), d'au moins un crantage qui définit au moins la position de service de la douille de sécurité (19), étant précisé que la douille de sécurité (19) présente au moins deux éléments de crantage (23) qui sont de préférence disposés en face l'un de l'autre, peuvent s'écarter élastiquement et viennent en prise dans les crans prévus sur la partie formant manchon (3).

2. Manchon de raccordement selon la revendication 1, caractérisé en ce qu'il est prévu deux crans qui sont formés par au moins deux rainures (20, 21) disposées, à une certaine distance axiale l'une de l'autre, sur la périphérie extérieure de la partie formant manchon (3), la partie (22) en forme de nervure restant entre les rainures (20, 21) présentant des arêtes de glissement chanfreinées.

3. Manchon de raccordement selon l'une des revendications 1 à 2, caractérisé en ce que, par leur extrémité fixe, les doigts de sécurité (16) sont fixés à une bague de maintien (10) qui enserre de par la forme la partie formant manchon (3).

4. Manchon de raccordement selon la revendication 3, caractérisé en ce que la bague de maintien (10) est en plusieurs parties.

5. Manchon de raccordement selon l'une des revendications 1 à 4, caractérisé en ce que les doigts de sécurité (16) sont, au moins dans la zone de leurs extrémités libres, d'une couleur différente de celle de la douille d'étanchéité (19).

6. Manchon de raccordement selon l'une des revendications 1 à 5, caractérisé en ce que la garniture de sécurité élastique (6) est de forme annulaire et en ce qu'on l'insère sous précontrainte dans un logement prévu dans la partie formant manchon (3).

7. Manchon de raccordement selon l'une des revendications -I à 6, caractérisé en ce que l'on vulcanise la garniture d'étanchéité élastique (6) dans un élargissement en forme de boisseau ouvert dans la direction opposée à la direction d'enfichage (8).

8. Manchon de raccordement selon l'une des revendications 1 à 7, caractérisé en ce que, du côté de la garniture d'étanchéité (6) opposé aux doigts de sécurité (16), la partie formant manchon (3) présente un élargissement correspondant au diamètre extérieur de l'extrémité du tube à enficher et limitée axialement par un épaulement (9).

9. Manchon de raccordement selon l'une des revendications 1 à 8, caractérisé en ce qu'au moins la douille de sécurité (19) est fabriquée en métal, qu'elle est guidée à une certaine distance radiale, sur la partie formant manchon (3) et qu'en position de service, elle recouvre la partie formant manchon (3), y compris les doigts de sécurité (16) ainsi qu'une partie de la conduite flexible (2) reliée à la partie formant manchon (3).

**Claims**

1. Coupling sleeve for connecting the ends of two lines for flowing media, in particular for fuel lines to internal combustion engines, with a sleeve part (3) which has at least one insertion opening (5) provided with an elastic sealing element (6) for receiving one end of a line, with at least two securing fingers (16) which can be deflected transverse to the direction of insertion (8) and which project past the sleeve part (3) counter to the direction of insertion (8) and the free ends of which are each provided with radially inwardly directed attachments (17) which lie behind a bead (18) on the inserted line end (1), and also with an axially displaceable securing sleeve (19) which in its operating position grips around the free ends of the securing fingers (16) in substantially play-free manner, characterised in that the securing fingers (16) are resilient and are positively attached by their fixed ends to the sleeve part (3) on which the securing sleeve (19) is guided, and that the sleeve part (3) is provided with at least one catch for the securing sleeve (19) which at least defines the operating position of the securing sleeve (19), the securing sleeve (19) having at least two preferably opposed, resiliently deflectable catch elements (23) which engage in the catches on the sleeve part (3).

2. Coupling sleeve according to Claim 1, characterised in that two catches are provided which are formed by at least two grooves (20, 21) disposed at an axial distance from each other on the outer circumference of the sleeve part (3), the crosspiece shaped part (22) which remains between the grooves (20, 21) having bevelled sliding edges.

3. Coupling sleeve according to one of Claims 1 to 2, characterised in that the securing fingers (16) are attached by their fixed ends to a holding ring (10) which grips positively around the sleeve part (3).

4. Coupling sleeve according to Claim 3, characterised in that the holding ring (10) is divided.

5. Coupling sleeve according to one of Claims 1 to 4, characterised in that the securing fingers (16) are coloured differently from the securing sleeve (19), at least in the region of their free ends.

6. Coupling sleeve according to one of Claims 1 to 5, characterised in that the elastic sealing element (6) is ring-shaped and is inserted in a recess in the sleeve part (3) under pre-tension.

7. Coupling sleeve according to one of Claims 1 to 6, characterised in that the elastic sealing element (6) is vulcanised into a cup-shaped widened section which is open counter to the direction of insertion (8).

8. Coupling sleeve according to one of Claims 1 to 7, characterised in that the sleeve part (3) on the side of the sealing element (6) facing away from the securing fingers (16) has a widened section which is axially limited by a shoulder (9) and which corresponds to the external diameter of the pipe end which is to be inserted.

9. Coupling sleeve according to one of Claims 1 to 8, characterised in that at least the securing sleeve (19) is made of metal and is guided on the sleeve part (3) at a radial distance therefrom, and also in the operating position covers the sleeve part (3) including the securing fingers (16) and a part of the flexible hose pipe (2) connected to the sleeve part (3).

Fig.1

Fig.2

Fig.3

Fig.4

1